(19) Europäisches Patentamt
European Patent Office
Office européen des brevets

(11) Veröffentlichungsnummer: **0 109 354**
**B1**

(12) # EUROPÄISCHE PATENTSCHRIFT

(45) Veröffentlichungstag der Patentschrift: **20.11.86**

(21) Anmeldenummer: **83810445.3**

(22) Anmeldetag: **03.10.83**

(51) Int. Cl.[4]: **A 01 N 59/16**, A 01 N 55/04, A 01 N 57/34, B 27 K 3/52, B 27 K 3/50, C 09 D 5/14, C 02 F 1/50

(54) **Biocid wirksame Gemische.**

(30) Priorität: **06.10.82 CH 5877/82**

(43) Veröffentlichungstag der Anmeldung: **23.05.84 Patentblatt 84/21**

(45) Bekanntmachung des Hinweises auf die Patenterteilung: **20.11.86 Patentblatt 86/47**

(84) Benannte Vertragsstaaten: **BE DE FR GB IT SE**

(56) Entgegenhaltungen:
**DE - A - 1 204 226**
**DE - A - 1 802 375**
**DE - A - 2 411 016**
**DE - B - 1 227 905**

***Carliste-Datenblatt***

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Grade, Reinhardt, Dr., Tulpenweg 11, D-6140 Bensheim (DE)**
Erfinder: **Wehner, Wolfgang, Dr., Wetzbach 34, D-6144 Zwingenberg (DE)**

**EP 0 109 354 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft biocid wirksame Gemische enthaltend eine Organozinnverbindung oder ein Zinnhalogenid und ein Phosphoniumhalogenid und die Verwendung dieser Gemische als Biocide.

Die Verwendbarkeit von Triorganozinnverbindungen, insbesondere von Organozinnoxiden als Biocide ist bekannt und deren Bedeutung hat in den letzten Jahren ständig zugenommen. Die Anwendung solcher Substanzen war während langer Zeit nur als Lösungen in organischen Lösungsmitteln möglich. Aus anwendungstechnischen und ökologischen Gründen war ihre Verwendbarkeit daher limitiert. Es bestand daher das Bedürfnis, ähnlich wirksame, jedoch wasserlösliche Biocide einsetzen zu können. Zur Erhöhung der Wasserlöslichkeit wurde in der GB-PS 1 467 420 vorgeschlagen, Organozinnverbindungen zusammen mit Ammoniumsalzen in wässrigen Systemen einzusetzen. Diese Methode ist allerdings nicht ganz befriedigend, entstehen doch in vielen Fällen nur Dispersionen, was die Mitverwendung organischer Lösungsmittel erfordert, oder eine Erhöhung der Wasserlöslichkeit tritt nicht oder kaum auf, was z.B. auf die Solubilisierung der Organozinnfluoride zutrifft. In anderen Fällen bringt man zwar die Organozinnverbindungen in kleinen Konzentrationen in Lösung, die Lösungen allerdings erweisen sich als unstabil.

In einem Datenblatt der Firma Carlisle werden antimikrobielle Formulierungen beschrieben, die als Wirksubstanz Dodecyl-triphenylphosphoniumchlorid enthalten. Diese Formulierungen eignen sich zum Beispiel als Desinfektionsmittel im Haushalt. Dodecyl-triphenylphosphoniumchlorid allein oder in Kombination mit Di-(tri-n-butylzinn)oxid ist auch ein wirksames Mittel zur Bekämpfung von Algen, schleimbildenden Bakterien und Pilzen in industriellen Kühlkreisläufen.

Gegenstand der vorliegenden Erfindung sind Gemische enthaltend

a) mindestens eine Organozinnverbindung der Formel I und/oder II und/oder VI

$$\left[R^1_3\,Sn\right]_n X \quad (I), \qquad R^1_3\,Sn{-}Y{-}SnR^1_3 \quad (II),$$

$$SnL_rM_t \quad (VI),$$

worin n 1, 2 oder 3 ist, r und t unabhängig voneinander die Werte von 0 bis 4 annehmen können, wobei die Summe (r + t) 4 sein muss, L und M unabhängig voneinander Fluorid, Chlorid, Bromid, Iodid, Cyanid, Cyanat oder Thiocyanat bedeuten, X das Anion einer n-wertigen anorganischen Säure oder einer n-wertigen Carbonsäure ist oder –OH bedeutet, Y Sauerstoff oder Schwefel bedeutet, und $R^1$ $C_1$–$C_6$ Alkyl ist, und

b) mindestens eine Phosphoniumverbindung der Formel III

$$\left[R^2_3\,PR^3\right] Q \quad (III),$$

worin $R^2$ $C_1$–$C_6$ Alkyl ist und $R^3$ $C_8$–$C_{18}$ Alkyl ist und Q Halogenid ist, wobei im Gemisch die Verbindungen III:I bzw. III:VI bzw. III:II in einem molaren Verhältnis von mindestens n:1 bzw. mindestens 1:1 bzw. mindestens 2:1 enthalten sind. $R^1$ und $R^2$ als $C_1$–$C_6$ Alkyl und $R^3$ als $C_8$–$C_{18}$ Alkyl sind beispielsweise geradkettige oder verzweigte Alkylreste wie Methyl, Ethyl, n-Propyl, Isopropyl, n-Butyl, sec.-Butyl, tert.-Butyl, n-Amyl, Isoamyl, n-Hexyl, n-Octyl, 2-Ethylhexyl, Decyl, Undecyl, Dodecyl, Tridecyl, Tetradecyl, Hexadecyl oder Octadecyl. Mischungen solcher Alkylgruppen wie Tetradecyl und Hexadecyl sind ebenfalls Gegenstand der vorliegenden Erfindung. Eine Bevorzugte Bedeutung von $R^3$ ist $C_{12}$–$C_{16}$-Alkyl.

Ebenfalls bevorzugt werden $R^1$ und $R^2$ unabhängig voneinander als n-Butyl.

X ist als Anion einer anorganischen Säure beispielsweise Fluorid, Chlorid, Bromid, Iodid, Cyanid, Cyanat, Thiocyanat, Nitrat, Sulfat, Phosphat, Thiophosphat oder Borat. Bevorzugte Anionen sind Fluorid und Chlorid.

X ist als Carboxylatanion das Anion eine n-wertige Carbonsäure, z.B. Formiat, Acetat, Propionat, Acrylat, Methacrylat, Hexanoat, Sebacat, Naphthenat, Abietat oder Citrat.

n ist bevorzugt 1.

Y ist bevorzugt Sauerstoff.

Besonders bevorzugt werden Gemische, dadurch gekennzeichnet, dass die Verbindung der Formel I Tributylzinnchlorid oder -fluorid ist.

Ebenfalls von Interesse sind Gemische, dadurch gekennzeichnet, dass die Verbindung der Formel II Di-(tributylzinn)-oxid ist.

Q ist als Halogenid, Fluorid, Chlorid, Bromid oder Iodid, bevorzugt Fluorid und insbesondere Chlorid.

Um 1 Mol einer Verbindung der Formel I $\left[R^1_3\,Sn\right]_n X$ in genügendem Masse zu solubilisieren, ist es vorteilhaft, wenn das Gemisch mindestens n-Mol der Verbindung der Formel III enthält, während bei Verbindungen der Formel VI mindestens 1 Mol der Verbindung der Formel III pro Mol der Verbindung VI ausreicht.

Für die Verbindungen der Formel II genügt in der Regel die doppelt-molare Menge einer Verbindung der Formel III, um zu hervorragenden Resultaten zu gelangen. Selbstverständlich kann die Verbindung III im Gemisch – falls erwünscht – auch in grossem Überschuss eingesetzt werden, etwa im molaren Verhältnis von 50:1. Um zu guter biocider Wirkung zu gelangen, werden in der Praxis Gemische von Verbindungen der Formel III und I oder III und VI, bzw. III und II eingesetzt, welche einem molaren Verhältnis von n:1 bis 20:1 bzw. von 1:1 bis 20:1 bzw. von 2:1 bis 20:1 entsprechen, bevorzugt n:1 bis 12:1 bzw. 1:1 bis 12:1 bzw. 2:1 bis 12:1.

Bevorzugt werden Gemische enthaltend mindestens eine Organozinnverbindung der Formel I und/oder II, worin X Fluorid, Chlorid, Bromid, Iodid, Cyanid, Cyanat, Thiocyanat, Nitrat, Sulfat, Phosphat, Thiophosphat, Borat, Formiat, Acetat, Propionat, Acrylat, Methacrylat, Hexanoat, Naphthenat, Sebacat oder Hydroxid bedeutet, $R^1$ $C_1$–$C_6$ Alkyl bedeutet, und enthaltend weiterhin mindestens eine Phosphoniumverbindung der Formel III, worin $R^2$ $C_1$–$C_6$ Alkyl ist, und $R^3$ $C_8$–$C_{18}$ Alkyl ist, und worin Q Fluorid, Chlorid, Bromid oder Iodid ist.

Besonderes Interesse gilt Gemischen enthaltend Verbindungen der Formeln I und/oder II und/oder VI und III, worin n 1 ist, und X und/oder L und/oder M Fluorid oder Chlorid bedeutet, Y Sauerstoff ist, und $R^1$ und $R^2$ unabhängig voneinander $C_1$–$C_6$ Alkyl sind, und $R^3$ $C_8$–$C_{18}$ Alkyl bedeutet und Q Chlorid oder Fluorid ist. Besonders bevorzugt werden Gemische enthaltend mindestens die Verbindung Tri-n-butyl-tetradecylphosphoniumchlorid und die Verbindung Di-(tri-n-butylzinn)-oxid.

Ebenfalls bevorzugt werden Gemische enthaltend mindestens die Verbindung Tri-n-butyl-tetradecylphosphoniumchlorid und die Verbindung Tri-n-butylzinnchlorid.

Von Interesse sind weiterhin Gemische enthaltend mindestens die Verbindung Tri-n-butyl-tetradecylphosphoniumchlorid und die Verbindung Tri-n-butylzinnfluorid.

Beispiele für Verbindungen der Formel I sind:

1. Trimethylzinnchlorid
2. Tri-n-butylzinnfluorid
3. Tri-n-butylzinnchlorid
4. Tri-n-butylzinnacetat
5. Tri-n-butylzinnacrylat
6. Tri-n-butylzinnmethacrylat
7. Tris-tri-n-butylzinnphosphat
8. Tri-n-butylzinnaphtenat
9. Tri-n-butylzinnbenzoat
10. Tri-n-butylzinncyanid
11. Tri-n-butylzinnthiocyanat

Beispiele für Verbindungen der Formel II sind:

12. Di-(trimethylzinn)-oxid
13. Di-(tri-n-butylzinn)-oxid
14. Di-(tri-n-butylzinn)-sulfid
15. Di-(tri-n-propylzinn)-oxid

Beispiele für Verbindungen der Formel III sind.

16. Tri-n-butyl-n-dodecyl-phosphoniumchlorid
17. Tri-n-butyl-tetradecyl-phosphoniumchlorid
18. Tri-n-butyl-n-decyl-phosphoniumchlorid
19. Tri-n-butyl-n-tetradecylphosphoniumbromid
20. Tri-n-butyl-n-lauryl-phosphoniumchlorid
21. Tri-n-butyl-n-lauryl-phosphoniumbromid
22. Tri-n-butyl-n-hexadecyl-phosphoniumchlorid
23. Tri-n-butyl-n-dodecyl-phosphoniumbromid

Beispiele für Verbindungen der Formel VI sind:

24. Zinntetrachlorid
25. Zinntetrafluorid
26. Zinntetrabromid
27. Zinntetraiodid.

Gute Resultate erzielt man mit Gemischen folgender Verbindungen: (2+22), (2+16), (12+17), (2+18), (3+17), (13+17), (8+17), (17+24) sowie (2+19).

Die Zinnsalze der Formel I, II und VI sind im Handel erhältliche Produkte. Die Phosphoniumhalogenide der Formel III sind ebenfalls Handelsprodukte oder können nach bekannten Methoden aus den entsprechenden Phosphinen und einem organischen Halogenid hergestellt werden.

Die Erfindung betrifft ferner die Verwendung eines Gemisches enthaltend mindestens eine Organozinnverbindung der Formel I und/oder II und/oder VI und mindestens ein Phosphoniumhalogenid der Formel III als Biocid.

Mit den erfindungsgemässen Gemischen wird ein breites Wirkungsspektrum in der Bekämpfung von tierischen und pflanzlichen Schädlingen geschaffen, woraus sich vielerlei Verwendungsmöglichkeiten, z.B. als Bactericide, Desinfektionsmittel, gegen Schleimbildung in der Papierherstellung, als Fungicide, Insekticide, Akaricide, Herbicide, sowie Algicide ergeben. Ausserdem eignen sich die neuen Stoffe ausgezeichnet als industrielle Antimikrobika zum Materialschutz, z.B. Schützen von Holz, Zellstoff und Papier, Textilien und Leder von Farben, Lacken, Antifoulingfarben und ähnlichen Beschichtungsstoffen, von optischen und anderen Glasern, von Kühlwasser, Kunststoffen, Gummi und Klebestoffen, von Bohr- und Schneideölen, von Erdöl, Schmierstoffen, Wachsen und Treibstoffen und andern Materialien.

Die erfindungsgemässen Gemische lassen sich insbesondere auch zum Schutz von biologisch abbaubaren Kunststoffen und Kunststoffzusammensetzungen einsetzen, bevorzugt zum Schutz von weichmacherhaltigem Polyvinylchlorid oder Polyvinylidenchlorid.

Die Verbindungen werden je nach Verwendungszweck in den dem Fachmann bekannten Konzentrationsbereichen eingesetzt. Die Grenzen der gebräuchlichen Konzentrationen sind durch folgende Werte gegeben: Während in Kühlwasser bereits Konzentrationen im ppm-Bereich genügen, so sind in Antifoulingrezepturen Konzentrationen bis 40 Gew.-% üblich.

Ein bevorzugter Anwendungsbereich sind Schutzanstrichmittel, insbesondere Antifoulingfarben, auf organischer Basis, die neben den üblichen Grund- und Zusatzstoffen 0,5–60 Gew.-%, vorzugsweise 3–40 Gew.-% und insbesondere 8–25 Gew.-% bezogen auf die Gesamtmischung, einer Verbindung der Formel I oder deren Gemische enthalten.

Übliche Grundstoffe für Antifoulingfarben sind die als Bindemittel bezeichneten und dem Fachmann bekannten Lackrohstoffe wie natürliche und synthetische Harze, homo- und copolymere Produkte mit den Monomeren Vinylchlorid, Vinylidenchlorid, Styrol, Vinyltoluol, Vinylestern, Acrylsäuren und Methacrylsäure sowie deren Estern, ferner Chlorkautschuk, natürlicher und synthetischer Kautschuk, gegebenenfalls chloriert oder cyclisiert, auch Reaktionsharze wie Epoxidharze, Polyurethanharze, ungesättigte Polyester die gegebenenfalls durch Zusatz von Härtern in Filmbildende höhermolekulare Produkte überführt werden können.

Die Bindemittel können flüssig sein oder in gelöster Form vorliegen. Bei gelösten Bindemitteln, auch Thermoplasten, kann ein Schutzfilm auch durch verdampfen des Lösungsmittels gebildet werden. Feste Beschichtungsmittel können z.B. im Pulverbeschichtungsverfahren auf Gegenstände aufgebracht werden. Weitere übliche Grundstoffe sind z.B. Teer, Modifikatoren, Farbstoffe, anorganische oder organische Pigmente, Füllstoffe und Härter.

Besonders hervorzuheben ist jedoch die Verwendung der erfindungsgemässen Gemische als wässrige oder wasserhaltige Lösungen im Materialschutz, insbesondere in Desinfektionsmittel, bei der Wasserbehandlung, in Holzschutzmitteln und Antifoulingfarben.

Die erfindungsgemäss verwendbaren Biocidgemische können auch weitere Aktivsubstanzen enthalten.

Beispiele dafür sind:

a) Organo-Schwefelverbindungen, z.B. Methylen-dithiocyanat (MBT) oder 3,5-Dimethyl-tetrahydro-1,3,5-2H-thiadiazin -2- thion (DMTT). Solche Substanzen werden insbesondere gegen Schleimbildung bei der Papierherstellung eingesetzt.

b) Chlorierte Phenole, wie Natrium-pentachlorphenolat. Solche Verbindungen zeichnen sich durch ein breites Wirkungsspektrum aus.

c) Kupfersalze, wie Kupfersulfat sind in geringen Mengen wirksame Algicide.

d) 2,2 - Dibrom - 3 - nitrilopropionamid (DBNPA) als Algicid, Fungicid und Bactericid.

e) Chlor und Brom sind bekannte, wirksame Algicide und Bactericide, welche besonders bei der Wasserbehandlung zum Einsatz gelangen.

f) Bei der Wasserbehandlung sind ausserdem Chlordioxid, Chlorisocyanurate und Hypochlorite gängige Biocide.

g) Bekannte Holzbiocide

$g^1$. Salzgemische auf Basis
- Silicofluoride
- Hydrogenfluoride
- anorg. Borverbindungen
- Chromate
- Fluoride
- Arsen (Oxid, Arsenate)
- Kupfersalz (Sulfat, Naphthenat)
- Zinn- und Zinksalze
- Quecksilberverbindungen

$g^2$. Teerölpräparate

$g^3$. Organische Wirkstoffe
- Pentachlorphenol
- Phenol
- DDT
- Dieldrin
- Lindan, Gammexan
- Chlorierte Naphthaline

h) Bekannte Desinfektionsmittel
- Phenol oder Phenolderivate
- Formaldehyd und/oder sonstige Aldehyde bzw. Derivate
- Chlor, organische oder anorganische Substanzen mit aktivem Chlor
- Amphotenside

i) Als besonders günstig hat sich ausserdem der Einsatz der erfindungsgemässen Gemische zusammen mit Ammoniumhalogeniden der Formel V erwiesen.

$$[R^4(R^5)N(R^6)R^7]\ Q \qquad (V),$$

worin Q Halogen bedeutet und $R^4$ und $R^5$ unabhängig voneinander Wasserstoff, $C_1$–$C_6$ Alkyl, $C_1$–$C_6$ Hydroxyalkyl oder ein Polyglycolrest mit einem Polymerisationsgrad von 2 bis 25 sind, und $R^6$ Wasserstoff, Hydroxy, $C_1$–$C_6$ Alkyl, $C_1$–$C_6$ Hydroxyalkyl, Glycidyl, $C_1$–$C_6$ Halogenalkyl, 2-Hydroxy -3- chlorpropyl, Phenyl, Benzyl, $C_8$–$C_{22}$ Alkylbenzyl, Mono- oder Dichlorbenzyl, Mono- oder Dinitrobenzyl, oder Trimethoxy- oder Triethoxysilylpropyl ist, und $R^7$ $C_8$–$C_{22}$ Alkyl, ein Polyglykolrest mit einem Polymerisationsgrad von 2–25, $R^8$-Phenoxyethoxyethyl, $R^8$–C(O)NH–$(CH_2)_m$ oder $R^8$–O-Phenoxyethoxyethyl ist, wobei $R^8$ $C_1$–$C_{12}$ Alkyl und m 2 oder 3 ist und $R^7$ ferner eine Gruppe der Formel VII

$$-Z-(R^4)N(R^5)R^6 \qquad (VII)$$

bedeutet, worin Z eine geradkettige oder verzweigtkettige $(C_vH_{2v})$-Gruppe ist, wobei v eine Zahl von 2–22 ist, und diese Gruppe ein- oder mehrmals durch –O–, –S–, –OC(O)–, –C(O)O– oder –N(R)– unterbrochen sein kann, wobei R Wasserstoff oder $C_1$–$C_4$ Alkyl ist, und $R^4$, $R^5$ und $R^6$ die oben angegebene Bedeutung haben und ferner zwei der Reste $R^4$, $R^5$, $R^6$ und $R^7$ zusammen mit dem Stickstoffatom, an welches sie gebunden sind, einen unsubstituierten oder mit einer oder zwei Methyl- oder Ethylgruppen substituierten gesättigten oder teilweise ungesättigten heterocyclischen Ring bilden, oder drei der Reste $R^4$, $R^5$, $R^6$ und $R^7$ zusammen mit dem Stickstoffatom, an welches sie gebunden sind, einen unsubstituierten oder mit einer oder zwei Methyl-, Ethyl-, Hydroxy- oder Acetylgruppen substituierten ungesättigten heterocyclischen Ring bilden.

$R^4$, $R^5$ und $R^6$ als $C_1$–$C_6$ Alkyl sind beispielsweise geradkettige oder verzweigte Alkylreste wie Methyl, Ethyl, n-Propyl, Isopropyl, n-Butyl, sec.-Butyl, n-Amyl, Isoamyl oder n-Hexyl.

$R^4$, $R^5$ und $R^6$ sind als $C_1$–$C_6$ Hydroxyalkyl z.B. Methylol, 2-Hydroxyethyl, 4-Hydroxypropyl oder 6-Hydroxyhexyl.

$R^6$ ist als $C_1$–$C_6$ und bevorzugt $C_1$–$C_2$ Halogen-

alkyl z.B. Chlormethyl, 2-Bromethyl oder 6-Chlorhexyl. Die bevorzugte Bedeutung von Halogen ist Chlor.

$R^6$ ist beispielsweise Benzyl, o-, m- oder p-Methylbenzyl, 2,3-, 2,4-, 3,4- oder 2,5-Dimethylbenzyl, Nonylbenzyl, Laurylbenzyl, Tetradecylbenzyl, o-, m- oder p-Chlorbenzyl, 2,3-, 3,4- 3,5- oder 2,5-Dichlorbenzyl, o-, m- oder p-Nitrobenzyl, 2,3-, 3,4-, 3,5- oder 2,5-Dinitrobenzyl.

$R^7$ kann als $C_8$–$C_{22}$ Alkyl n-Octyl, 2-Ethylhexyl, verzweigtes oder unverzweigtes Nonyl, Decyl, Undecyl, Dodecyl, Tridecyl, Tetradecyl, Hexadecyl, Octadecyl, Eicosyl oder Docosyl bedeuten.

Ist $R^7$ eine Gruppe der Formel (VII), so bedeutet Z z.B. Ethylen, Trimethylen-1,3; Tetramethylen-1,4; Propyliden,$-CH_2CH_2-O-CH_2CH_2-$, $-(CH_2O)_4CH_2CH_2-$, $-CH_2CH_2-NH-CH_2CH_2-$, $-CH_2CH_2-N(CH_3)-CH_2CH_2-$, oder $-CH_2COOCH_2CH_2-$.

$R^8$ ist als $C_1$–$C_{12}$ Alkyl, z.B. Methyl, Ethyl, n-Propyl, n-Butyl, sec.-Butyl, n-Hexyl, n-Octyl, 2-Ethylhexyl, 1,1,3,3-Tetramethylbutyl, unverzweigtes oder verzweigtes Nonyl, Decyl oder Dodecyl.

Bilden zwei der Reste $R^4$, $R^5$, $R^6$ und $R^7$ zusammen mit dem Stickstoffatom einen unsubstituierten oder mit einer oder zwei Methyl- oder Ethylgruppen substituierten gesättigten oder teilweise gesättigten heterocyclischen Ring, so handelt es sich beispielsweise um Pyrrolidin, Piperidin, 2-Methylpiperidin, Piperazin, 2,5-Dimethylpiperazin oder Morpholin.

Bilden drei der Reste $R^4$, $R^5$, $R^6$ und $R^7$ zusammen mit dem Stickstoffatom einen unsubstituierten oder mit einer oder zwei Methyl- oder Ethylgruppen substituierten ungesättigten heterocyclischen Ring, kann es sich um Pyridin, 4-Methylpyridin, Chinolin, Pyrimidin, Thiazol, Imidazol, Oxazol, 2-Hydroxypyridin oder 4-Acetylpyridin handeln.

Verbindungen der Formel V können bezogen auf die Verbindungen der Formel I oder II oder VI in einem molaren Verhältnis von 0:1 bis 50:1, vorzugsweise bis 6:1 eingesetzt werden. Vorzugsweise ist das molare Verhältnis der Summe der Verbindungen der Formel III zu den Verbindungen der Formel I n:1 bis 12:1, zu den Verbindungen der Formel II 2:1 bis 12:1, und zu den Verbindungen der Formel VI 1:1 bis 12:1.

In solchen Formulierungen können ausserdem noch weitere Substanzen und Hilfsmittel enthalten sein, wie sie üblicherweise in solchen Zubereitungen mitverwendet werden. Hierzu gehören z.B. kationische oder nichtionische oberflächenaktive Substanzen, Elektrolyte, Komplexbildner, Lösungsvermittler, sowie Farb- und Duftstoffe. Diese Zusätze dienen beispielsweise zur Verbesserung des Netzvermögens, der Härtestabilität, zur Viskositätseinstellung und zur Erhöhung der Kältestabilität der Lösungen.

Für den Transport wässriger Systeme, welche Biocide enthalten, ist es besonders vorteilhaft, wenn diese die Biocide in hohen Konzentrationen gelöst enthalten. Diese werden vom Endverbraucher auf die für die spezielle Applikation gewünschte Konzentration verdünnt oder in vielen Fällen tel quel eingesetzt. Ein weiterer Gegenstand der vorliegenden Erfindung sind daher auch wässrige Systeme, enthaltend mindestens eine Organozinnverbindung der Formeln I und/oder II und/oder VI und mindestens eine Verbindung der Formel III, wobei das molare Verhältnis der Verbindungen der Formel III:I oder III:VI mindestens n:1 oder 1:1 und das Verhältnis der Verbindungen der Formeln III:II mindestens 2:1 beträgt.

Diese Lösungen enthalten etwa 0,1 bis 1,5 Mol-% der Verbindung der Formel I oder der Formel VI, etwa 0,1 bis 3 Mol-% der Verbindung der Formel II, sowie etwa 0,1 bis 6 Mol-% der Verbindung der Formel III.

Je nach Verwendungszweck wird innerhalb dieser ungefähren Grenzen die Konzentration gewählt. So ist man z.B. im Holzschutz an hohen Konzentrationen interessiert, währenddem für die Wasserbehandlung auch tiefere Konzentrationen gewählt werden können.

In den untenstehenden Beispielen wird die Erfindung näher erläutert.

Beispiel 1

Einer 80%igen wässrigen Lösung von Tributyltetradecylphosphoniumchlorid (Vrb. 17) wird bei 30 °C Di-(tributylzinn)oxid (Vrb. 13) zugegeben. Dieses Gemisch wird während 24 h ständig geschüttelt. Danach wird festgestellt, ob sich die gesamte Menge Tributylzinnoxid gelöst hat.

Auf diese Weise ist es möglich, 8,4 Mol-% der Verbindung (13) in Lösung zu bringen, während die Endkonzentration der Verbindung (17) 9,2 Mol-% beträgt. Die gleiche Endkonzentration wird an (13) erhalten, wenn man von einer 40%-igen wässrigen Lösung von (17) ausgeht.

Beispiel 2

Bei analoger Versuchsanordnung wie in Beispiel 1 gelingt es, anstelle der Verbindung (13) 3,8 Mol-% Tributylzinnchlorid (Vrb. 3) in Lösung zu bringen, wobei die Endkonzentration der Verbindung (17) 15.3 Mol-% beträgt.

Beispiel 3

Bei analoger Versuchsanordnung wie in Beispiel 1 gelingt es, anstelle der Verbindung (13) 2,9 Mol-% Tributylzinnfluorid (Vrb. 2) in Lösung zu bringen, wobei die Endkonzentration der Verbindung (17) 16,7 Mol-% beträgt. Dasselbe Resultat wird auch mit einer 40%igen Lösung von (17) erhalten.

Beispiele 4–7

Analog Beispiel 1 werden folgende Resultate erzielt (Endkonzentrationen)

| Bsp. | P-Verbindung | | Sn-Verbindung | |
|---|---|---|---|---|
| Nr. | Nr. | (Mol-%) | Nr. | (Mol-%) |
| 4 | 17 | 13,1 | 8 | 7,1 |
| 5 | 18 | 19,2 | 2 | 2,9 |
| 6 | 16 | 17,9 | 2 | 2,9 |
| 7 | 19 | 15,9 | 2 | 1,5 |

Beispiel 8

Untersuchung der Wirksamkeit in Kühlkreisläufen

Die im Freien stehenden (natürliche Sonneneinstrahlung, Staubeinfall, Witterungseinflüsse) Kühlkreisläufe bestanden aus:

a) einem Kunststoffass mit einem Volumen von 113 l und einem Überlauf

b) einer Pumpe (21 l/min bei 3 m Förderhöhe)

c) einem Kühlturm mit Oregon-(Splint), Oregon-(Kernholz), Eiche-, Fichte-, Asbestzement- und PVC-Platte

Die Frischwasser-Zufuhr war so eingestellt, dass der Spritz- und Verdunstungsverlust ausgeglichen wurde und die Biocide in 24 h ungefähr 1:2 verdünnt wurden.

Die Kühlkreisläufe sind durch den natürlichen Staubeinfall und nicht durch gezielte Beimpfung infiziert.

Zur Verhinderung der Schleimbildung und des Algenwuchses wurde der Kühlkreislauf mit 21 ppm 2mal/Woche einer Lösung von 45% der Verbindung 17 und 5% der Verbindung 13 in Wasser behandelt.

Ausgewertet wurde der Versuch durch visuelle Beobachtung des Bewuchses auf den Platten.

Der unbehandelte Kreislauf zeigte schon nach 4 Wochen den ersten Algenbewuchs, die Hölzer waren nach 5 Monaten verschleimt und mit einer dicken Algenschicht überzogen. Der mit 21 ppm 2mal/Woche behandelte Kreislauf zeigte keinerlei Anzeichen von beginnender Schleimbildung und Algenbewuchs. Eine in diesen Konzentrationen und Häufigkeit eingesetzte Lösung der Phosphoniumverbindung 17 allein würde den Algenbewuchs über diese Zeit nicht gänzlich unterdrücken.

Beispiel 9

Wachstum auf Holz

Holzklötzchen aus Fichte, 7 × 10 × 10 mm gross, wurden 30 min im Vakuum getrocknet. Dann wurden die Klötzchen vakuumprägniert, indem sie in 100 ml dest. Wasser und Biocid für 30 min im Vakuum belassen wurden und danach für 18 h im Wasser einer Druckbehandlung (2 atü durch Pressluft) ausgesetzt wurden. Die so behandelten Holzstücke wurden erst einer Auslaugung im fliessenden Wasser unterworfen und dann getrocknet.

Die getrockneten Holzstückchen wurden auf Kartoffel-Glucose-Agar gelegt und das Holz sowie der umliegende Agar mit 0,1 ml einer Sporensuspension einer Mischkultur von Aspergillus niger, Aspergillus phoenicis, Penicillium funiculosum, Alternaria alternata, Cladosporum cladasporoidis, Aureobasidium pullulans und Cheetomium globusum (1 + 1 + 1 etc.) eingeimpft. Nach 4-wöchiger Bebrütung bei 28 °C wurde nach Wuchs nach folgendem Schema ausgewertet:

1 = Wuchs auf dem Holz, wie unbehandelte Probe
2 = Wuchs auf dem Holz, schwächer als Kontrolle
3 = kein Wuchs auf dem Holz
4 = kein Wuchs auf dem Holz, Hemmzone

| 50% Verbindung | 1% Verbindung | Wuchs nach 1 Woche Wasserlagerung | Wuchs nach 4 Wochen Wasser-TB lagerung |
|---|---|---|---|
| 17 | 3 | 4 | 4 |
| 17 | 2 | 4 | 4 |
| 17 | – | 1–2 | 2 |

Aus der Tabelle ist die hervorragende Wirkung der Formulierungen im Holzschutz, auch noch nach Wasserlagerung, zu erkennen.

**Patentansprüche**

1. Gemische enthaltend

a) mindestens eine Organozinnverbindung der Formel I und/oder II und/oder VI

$$\left[R^1_3\,Sn\right]_n X \text{ (I)}, \qquad R^1_3\,Sn{-}Y{-}SnR^1_3 \text{ (II)},$$

$$SnL_rM_t \text{ (VI)},$$

worin n 1, 2 oder 3 ist, r und t unabhängig voneinander die Werte von 0 bis 4 annehmen können, wobei die Summe (r + t) 4 sein muss, L und M unabhängig voneinander Fluorid, Chlorid, Bromid, Iodid, Cyanid, Cyanat oder Thiocyanat bedeuten, X das Anion einer n-wertigen anorganischen Säure oder einer n-wertigen Carbonsäure ist oder –OH bedeutet, Y Sauerstoff oder Schwefel bedeutet, und $R^1$ $C_1$–$C_6$ Alkyl ist, und

b) mindestens eine Phosphoniumverbindung der Formel III

$$\left[R^2_3\,PR^3\right] Q \text{ (III)},$$

worin $R^2$ $C_1$–$C_6$ Alkyl ist und $R^3$ $C_8$–$C_{18}$ Alkyl ist und Q Halogenid ist, wobei im Gemisch die Verbindungen III:I bzw. III:VI bzw. III:II in einem molaren Verhältnis von mindestens n:1 bzw. mindestens 1:1 bzw. mindestens 2:1 enthalten sind.

2. Gemische gemäss Anspruch 1, enthaltend mindestens eine Organozinnverbindung der Formel I und/oder II, worin X Fluorid, Chlorid, Bromid, Iodid, Cyanid, Cyanat, Thiocyanat, Nitrat, Sulfat, Phosphat, Thiophosphat, Borat, Formiat, Acetat, Propionat, Acrylat, Methacrylat, Hexanoat, Naphthenat, Sebacat oder Hydroxid bedeutet, $R^1$ $C_1$–$C_6$ Alkyl bedeutet, und enthaltend weiterhin mindestens eine Phosphoniumverbindung der Formel III, worin $R^2$ $C_1$–$C_6$ Alkyl ist und $R^3$ $C_8$–$C_{18}$ Alkyl bedeutet.

3. Gemische gemäss Anspruch 1, enthaltend Verbindungen der Formel I und/oder II und/oder VI und III, worin n 1 ist, und X und/oder L und/oder M Fluorid oder Chlorid bedeutet, Y Sauer-

stoff ist, und $R^1$ und $R^2$ unabhängig voneinander $C_1$–$C_6$ Alkyl sind, und $R^3$ $C_8$–$C_{18}$ Alkyl bedeutet und Q Chlorid oder Fluorid ist.

4. Gemische gemäss Anspruch 1, dadurch gekennzeichnet, dass $R^3$ $C_{12}$–$C_{16}$ Alkyl ist.

5. Gemische gemäss Anspruch 1, dadurch gekennzeichnet, dass X in der Formel I Fluorid oder Chlorid bedeutet.

6. Gemische gemäss Anspruch 1, dadurch gekennzeichnet, dass $R^1$ und $R^2$ n-Butyl bedeuten.

7. Gemische gemäss Anspruch 1, dadurch gekennzeichnet, dass die Verbindung der Formel I Tributylzinnchlorid oder -fluorid ist.

8. Gemische gemäss Anspruch 1, dadurch gekennzeichnet, dass die Verbindung der Formel II Di-(tributylzinn)oxid ist.

9. Gemische gemäss Anspruch 1, enthaltend mindestens die Verbindung Tri-n-butyl-tetradecyl-phosphoniumchlorid und die Verbindung Di-(tri-n-butylzinn)-oxid.

10. Gemische gemäss Anspruch 1, enthaltend mindestens die Verbindung Tri-n-butyl-tetradecyl-phosphoniumchlorid und die Verbindung Tri-n-butylzinnchlorid.

11. Gemische gemäss Anspruch 1, enthaltend mindestens die Verbindung Tri-n-butyl-tetradecyl-phosphoniumchlorid und die Verbindung Tri-n-butylzinnfluorid.

12. Gemische gemäss Anspruch 1, enthaltend zusätzlich mindestens ein Ammoniumhalogenid der Formel V

$$[(R^4)R^5NR^6(R^7)]\,Q \qquad (V)$$

worin Q Halogen bedeutet und $R^4$ und $R^5$ unabhängig voneinander Wasserstoff, $C_1$–$C_6$ Alkyl, $C_1$–$C_6$ Hydroxyalkyl oder ein Polyglycolrest mit einem Polymerisationsgrad von 2 bis 25 sind, und $R^6$ Wasserstoff, Hydroxy, $C_1$–$C_6$ Alkyl, $C_1$–$C_6$ Hydroxyalkyl, Glycidyl, $C_1$–$C_6$ Halogenalkyl, 2-Hydroxy -3- chlorpropyl, Phenyl, Benzyl, $C_8$–$C_{22}$ Alkylbenzyl, Mono- oder Dichlorbenzyl, Mono- oder Dinitrobenzyl, oder Trimethoxy- oder Triethoxysilylpropyl ist, und $R^7$ $C_8$–$C_{22}$ Alkyl, ein Polyglykolrest mit einem Polymerisationsgrad von 2–25, $R^8$-Phenoxyethoxyethyl, $R^8$-C(O)NH–$(CH_2)_m$- oder $R^8$–O–Phenoxyethoxyethyl ist, wobei $R^8$ $C_1$–$C_{12}$ Alkyl und m 2 oder 3 ist und $R^7$ ferner eine Gruppe der Formel VII

$$-Z-(R^4)N(R^5)R^6 \qquad (VII)$$

bedeutet, worin Z eine geradkettige oder verzweigte $(C_vH_{2v})$ Gruppe ist, wobei v eine Zahl von 2 bis 22 ist, und diese Gruppe ein- oder mehrmals durch –O–, –S–, –OC(O)–, –C(O)O– oder –N(R)– unterbrochen sein kann, wobei R Wasserstoff oder $C_1$–$C_4$ Alkyl ist und $R^4$, $R^5$ und $R^6$ die oben angegebene Bedeutung haben und ferner zwei der Reste $R^4$, $R^5$, $R^6$ und $R^7$ zusammen mit dem Stickstoffatom, an welches sie gebunden sind, einen unsubstituierten oder mit einer oder zwei Methyl- oder Ethylgruppen substituierten gesättigten oder teilweise ungesättigten heterocyclischen Ring bilden, oder drei der Reste $R^4$, $R^5$, $R^6$ und $R^7$ zusammen mit dem Stickstoffatom, an welches sie gebunden sind, einen unsubstituierten oder mit einer oder zwei Methyl-, Ethyl-, Hydroxy- oder Acetylgruppen substituierten ungesättigten heterocyclischen Ring bilden.

13. Gemische gemäss Anspruch 12, dadurch gekennzeichnet, dass zwei der Reste $R^4$, $R^5$, $R^6$ und $R^7$ zusammen mit dem Stickstoff Pyrrolidin, Piperidin oder Morpholin bilden oder drei der Reste $R^4$, $R^5$, $R^6$ und $R^7$ zusammen mit dem Stickstoff Pyridin, Chinolin, Pyrimidin, Thiazol oder Imidazol bilden.

14. Gemische gemäss Anspruch 1, dadurch gekennzeichnet, dass das molare Verhältnis der Verbindungen der Formeln III:I n:1 bis 20:1 beträgt.

15. Gemische gemäss Anspruch 1, dadurch gekennzeichnet, dass das molare Verhältnis der Verbindungen der Formeln III:II 2:1 bis 20:1 beträgt.

16. Gemische gemäss Anspruch 1, dadurch gekennzeichnet, dass das molare Verhältnis der Verbindungen der Formeln III:VI 1:1 bis 20:1 beträgt.

17. Wässrige Systeme, enthaltend mindestens eine Organozinnverbindung der Formeln I und/oder II und/oder VI gemäss Anspruch 1 und mindestens eine Verbindung der Formel III gemäss Anspruch 1, wobei das molare Verhältnis der Verbindungen der Formel III:I oder III:VI mindestens n:1 oder 1:1 und das Verhältnis der Verbindungen der Formeln III:II mindestens 2:1 beträgt.

18. Systeme gemäss Anspruch 17, enthaltend etwa 0,1 bis 1,5 Mol-% der Verbindung der Formel I oder der Formel VI, und/oder etwa 0,1 bis 3 Mol-% der Verbindung der Formel II, sowie etwa 0,1 bis 6 Mol-% der Verbindung der Formel III.

19. Verwendung von Gemischen gemäss Anspruch 1 als Biocide.

20. Verwendung gemäss Anspruch 19 zum Materialschutz.

21. Verwendung gemäss Anspruch 20 zum Holzschutz.

22. Verwendung gemäss Anspruch 20 in Antifoulingfarben.

23. Verwendung gemäss Anspruch 19 in Desinfektionsmitteln.

24. Verwendung gemäss Anspruch 19 zur Wasserbehandlung.

## Revendications

1. Mélanges contenant:

a) au moins un composé organo-stannique répondant à la formule I et/ou à la formule II et/ou à la formule VI:

$$\left[R^1_3\,Sn\right]_n X \;(I), \qquad R^1_3\,Sn{-}Y{-}SnR^1_3 \;(II),$$

$$SnL_rM_t \qquad (VI)$$

dans lesquelles n représente un nombre égal à 1, à 2 ou à 3, r et t représentent chacun, indépendamment l'un de l'autre, un nombre de 0 à 4, la somme (r + t) devant être égale à 4, L et M représentent chacun, indépendamment l'un de l'autre, un radical fluorure, chlorure, bromure, iodure, cyanure, cyanate ou thiocyanate, X représente l'anion d'un acide minéral de fonctionnalité égale à n ou d'un acide carboxylique de fonctionnalité égale à n ou représente –OH, Y représente l'oxygène ou le soufre, et $R^1$ représente un radical alkyle contenant de 1 à 6 atomes de carbone, et

b) au moins un composé de phosphonium répondant à la formule III:

$$\left[R^2_3 PR^3\right] Q \qquad (III)$$

dans laquelle $R^2$ représente un radical alkyle contenant de 1 à 6 atomes carbone, $R^3$ un radical alkyle contenant de 8 à 18 atomes de carbone et Q un halogénure, le rapport molaire, dans ce mélange, entre, d'une part, le composé (III) et, d'autre part, le composé (I), le composé (VI) ou le composé (II) étant respectivement d'au moins n:1, d'au moins 1:1 ou d'au moins 2:1.

2. Mélanges selon la revendication 1 qui contiennent au moins un composé organo-stannique répondant à la formule I et/ou à la formule II dans lesquelles X représente un radical fluorure, chlorure, bromure, iodure, cyanure, cyanate, thiocyanate, nitrate, sulfate, phosphate, thiophosphate, borate, formiate, acétate, propionate, acrylate, méthacrylate, hexanoate, naphténate, sébaçate ou hydroxyde et $R^1$ représente un alkyle en $C_1$–$C_6$, et qui contiennent en outre au moins un composé de phosphonium répondant à la formule III dans laquelle $R^2$ représente un alkyle en $C_1$–$C_6$ et $R^3$ un alkyle en $C_8$–$C_{18}$.

3. Mélanges selon la revendication 1 qui contiennent des composés de formules I et/ou II et/ou VI et de formule III dans lesquelles n est égal à 1, X et/ou L et/ou M représentent un radical fluorure ou chlorure, Y représente l'oxygène, $R^1$ et $R^2$ représentent chacun, indépendamment l'un de l'autre, un alkyle en $C_1$–$C_6$, $R^3$ représente un alkyle en $C_8$–$C_{18}$ et Q représente un radical chlorure ou fluorure.

4. Mélanges selon la revendication 1 caractérisés en ce que $R^3$ représente un radical alkyle en $C_{12}$–$C_{16}$.

5. Mélanges selon la revendication 1 caractérisés en ce que X, dans la formule I, représente un radical fluorure ou chlorure.

6. Mélanges selon la revendication 1 caractérisés en ce que $R^1$ et $R^2$ représentent chacun un radical n–butyle.

7. Mélanges selon la revendication 1 caractérisés en ce que le composé de formule I est le chlorure ou le fluorure de tributyl–étain.

8. Mélanges selon la revendication 1 caractérisés en ce que le composé de formule II est l'oxyde de bis- (tributyl-étain).

9. Mélanges selon la revendication 1 qui contiennent au moins du chlorure de tris- (n-butyl)-tétradécyl-phosphonium et de l'oxyde de bis-(tri-n-butyl-étain).

10. Mélanges selon la revendication 1 qui contiennent au moins du chlorure de tris-(n-butyl)-tétradécyl-phosphonium et du chlorure de tris-n-butyl-étain.

11. Mélanges selon la revendication 1 qui contiennent au moins du chlorure de tris-(n-butyl)-tétradécyl-phosphonium et du fluorure de tris-n-butyl-étain.

12. Mélanges selon la revendication 1 qui contiennent en outre au moins un halogénure d'ammonium répondant à la formule V:

$$[(R^4)R^5NR^6(R^7)]\, Q \qquad (V)$$

dans laquelle

Q représente un halogène,

$R^4$ et $R^5$ représentent chacun, indépendamment l'un de l'autre, l'hydrogène, un alkyle en $C_1$–$C_6$, un hydroxyalkyle en $C_1$–$C_6$ ou un radical de polyglycol ayant un degré de polymérisation de 2 à 25,

$R^6$ représente l'hydrogène, un hydroxy, un alkyle en $C_1$–$C_6$, un hydroxyalkyle en $C_1$–$C_6$, un glycidyle, un halogéno-alkyle en $C_1$–$C_6$, un radical hydroxy-2 chloro-3 propyle, un phényle, un benzyle, un alkylbenzyle renfermant de 8 à 22 atomes de carbone, un radical mono- ou dichlorobenzyle, un radical mono- ou dinitro-benzyle, ou un radical triméthoxysilyl-propyle ou triéthoxysilyl-propyle, et

$R^7$ représente un alkyle en $C_8$–$C_{22}$, un radical de polyglycol ayant un degré de polymérisation de 2 à 25, un radical $R^8$-phénoxy-éthoxyéthyle, $R^8$–C(O)NH–$(CH_2)_m$- ou $R^8$–O–phénoxy-éthoxyéthyle où $R^8$ désigne un alkyle en $C_1$–$C_{12}$ et m le nombre 2 ou le nombre 3, $R^7$ pouvant en outre représenter un radical répondant à la formule VII:

$$-Z-(R^4)N(R^5)R^6 \qquad (VII)$$

dans laquelle Z représente un radical-$(C_vH_{2v})$-linéaire ou ramifié, dont l'indice v est un nombre de 2 à 22 et qui peut être interrompu, une ou plusieurs fois, par –O–, –S–, –OC(O)–, –C(O)O– ou –N(R)–, le symbole R désignant l'hydrogène ou un alkyle en $C_1$–$C_4$, et $R^4$, $R^5$ et $R^6$ ont les significations précédemment données, et deux des symboles $R^4$, $R^5$, $R^6$ et $R^7$ peuvent en outre former ensemble, et avec l'atome d'azote auquel ils sont liés, un hétérocycle saturé ou partiellement insaturé, non substitué ou porteur d'un ou de deux radicaux méthyles ou éthyles, ou trois des symboles $R^4$, $R^5$, $R^6$ et $R^7$ peuvent former ensemble, et avec l'atome d'azote auquel ils sont liés, un hétérocycle insaturé qui ne porte pas de substituant ou qui porte un ou deux radicaux méthyles, éthyles, hydroxy ou acétyles.

13. Mélanges selon la revendication 12 caractérisés en ce que deux des radicaux $R^4$, $R^5$, $R^6$ et $R^7$ forment ensemble, et avec l'atome d'azote, un noyau de pyrrolidine, de pipéridine ou de morpholine, ou trois des radicaux $R^4$, $R^5$, $R^6$ et $R^7$ forment ensemble, et avec l'azote, un noyau de pyridine, de quinoléine, de pyrimidine, de thiazole ou d'imidazole.

14. Mélanges selon la revendication 1, caractérisés en ce que le rapport molaire des composés

de formule III aux composés de formule I est compris entre n:1 et 20:1.

15. Mélanges selon la revendication 1, caractérisés en ce que le rapport molaire des composés de formule III aux composés de formule II est compris entre 2:1 et 20:1.

16. Mélanges selon la revendication 1, caractérisés en ce que le rapport molaire des composés de formule III aux composés de formule VI est compris entre 1:1 et 20:1.

17. Systèmes aqueux contenant au moins un composé organo-stannique de formules I et/ou II et/ou VI selon la revendication 1 et au moins un composé de formule III selon la revendication 1, le rapport molaire des composés de formule III aux composés de formule I ou des composés de formule III aux composés de formule VI étant respectivement d'au moins n:1 ou 1:1, et le rapport des composés de formule III aux composés de formule II étant d'au moins 2:1.

18. Systèmes selon la revendication 17 qui contiennent d'environ 0,1 à 1,5% en moles du composé de formule I ou de formule VI, et/ou d'environ 0,1 à 3% en moles du composé de formule II, ainsi que d'environ 0,1 à 6% en moles du composé de formule III.

19. Application de mélanges selon la revendication 1 comme biocides.

20. Application selon la revendication 19 pour la protection de matières.

21. Application selon la revendication 20 pour la protection du bois.

22. Application selon la revendication 20 dans des peintures antisalissures.

23. Application selon la revendication 19 dans des produits désinfectants.

24. Application selon la revendication 19 pour le traitement des eaux.

## Claims

1. A mixture containing

a) at least one organotin compound of the formula I and/or II and/or VI

$$\left[R^1_3\,Sn\right]_n X \text{ (I)}, \qquad R^1_3\,Sn\text{–}Y\text{–}SnR^1_3 \quad \text{(II)},$$

$$SnL_rM_t \quad \text{(VI)},$$

in which formulae n is 1, 2 or 3, each of r and t independently of the other can assume a value from 0 to 4, with the proviso thah the sum of r and t must be 4, each of L and M independently of the other is fluoride, chloride, bromide, iodide, cyanide, cyanate or thiocyanate, X is the anion of an n-valent inorganic acid or an n-valent carboxylic acid or is –OH, Y is oxygen or sulfur and $R^1$ is $C_1$–$C_6$alkyl, and

b) at least one phosphonium compound of the formula III

$$\left[R^2_3\,PR^3\right] Q \quad \text{(III)}$$

in which $R^2$ is $C_1$–$C_6$alkyl and $R^3$ is $C_8$–$C_{18}$alkyl and Q is a halide, the combinations III:I or III:VI or III:II being present in the mixture in a molar ratio of at least n:1 or at least 1:1 or at least 2:1, respectively.

2. A mixture according to claim 1 containing at least one organotin compound of the formula I and/or II, in which formulae X is fluoride, chloride, bromide, iodide, cyanide, cyanate, thiocyanate, nitrate, sulfate, phosphate, thiophosphate, borate, formate, acetate, propionate, acrylate, methacrylate, hexanoate, naphthenate, sebacate or hydroxide, and $R^1$ is $C_1$–$C_6$alkyl, and also containing at least one phosphonium compound of the formula III, in which $R^2$ is $C_1$–$C_6$alkyl and $R^3$ is $C_8$–$C_{18}$alkyl.

3. A mixture according to claim 1 containing compounds of the formula I and/or II and/or VI and III, in which formulae n is 1 and X and/or L and/or M is fluoride or chloride, Y is oxygen and each of $R^1$ and $R^2$ independently of the other is $C_1$–$C_6$alkyl and $R^3$ is $C_8$–$C_{18}$alkyl and Q is chloride or fluoride.

4. A mixture according to claim 1, wherein $R^3$ is $C_{12}$–$C_{16}$alkyl.

5. A mixture according to claim 1, wherein X in the formula I is fluoride or chloride.

6. A mixture according to claim 1, wherein $R^1$ and $R^2$ are n-butyl.

7. A mixture according to claim 1, wherein the compound of the formula I is tributyltin chloride or fluoride.

8. A mixture according to claim 1, wherein the compound of the formula II is di(tributyltin) oxide.

9. A mixture according to claim 1 containing at least the compound tri-n-butyltetradecylphosphonium chloride and the compound di(tri-n-butyltin) oxide.

10. A mixture according to claim 1 containing at least the compound tri-n-butyltetradecylphosphonium chloride and the compound tri-n-butyltin chloride.

11. A mixture according to claim 1 containing at least the compound tri-n-butyltetradecylphosphonium chloride and the compound tri-n-butyltin fluoride.

12. A mixture according to claim 1, containing, in addition, at least one ammonium halide of the formula V

$$[(R^4)R^5NR^6(R^7)]\,Q \quad \text{(V)}$$

in which Q is halogen and each of $R^4$ and $R^5$ independently of the other is hydrogen, $C_1$–$C_6$alkyl, $C_1$–$C_6$hydroxyalkyl or a polyglycol radical having a degree of polymerisation of 2 to 25, and $R^6$ is hydrogen, hydroxy, $C_1$–$C_6$alkyl, $C_1$–$C_6$hydroxyalkyl, glycidyl, $C_1$–$C_6$haloalkyl, 2-hydroxy -3- chloropropyl, phenyl, benzyl, $C_8$–$C_{22}$alkylbenzyl, monochlorobenzyl, dichlorobenzyl, mononitrobenzyl, dinitrobenzyl, trimethoxysilylpropyl or triethoxysilylpropyl, and $R^7$ is $C_8$–$C_{22}$alkyl, a polyglycol radical having a degree of polymerisation of 2 to 25, $R^8$-phenoxyethoxyethyl, $R^8$–C(O)NH–

$(CH_2)_m-$ or $R^8-O-$ phenoxyethoxyethyl, in which formulae $R^8$ is $C_1-C_{12}$alkyl and m is 2 or 3, and $R^7$ is also a group of the formula VII,

$$-Z-(R^4)N(R^5)R^6 \quad (VII),$$

in which Z is a straight chain or branched $(C_vH_{2v})$ group, in which v is a value from 2 to 22, and which group may be interrupted once or more than once by $-O-$, $-S-$, $-OC(O)-$, $-C(O)O-$ or $-N(R)-$, in which R is hydrogen or $C_1-C_4$alkyl, and $R^4$, $R^5$ and $R^6$ are as defined above, and, in addition, two of the radicals $R^4$, $R^5$, $R^6$ and $R^7$, together with the nitrogen atom to which they are attached, form a saturated or partially unsaturated heterocyclic ring which is unsubstituted or substituted by one or two methyl or ethyl groups, or three of the radicals $R^4$, $R^5$, $R^6$ and $R^7$, together with the nitrogen atom to which they are attached, form an unsaturated heterocyclic ring which is unsubstituted or substituted by one or two methyl, ethyl, hydroxyl or acetyl groups.

13. A mixture according to claim 12, wherein two of the radicals $R^4$, $R^5$, $R^6$ and $R^7$, together with the nitrogen atom, form pyrrolidine, piperidine or morpholine, or three of the radicals $R^4$, $R^5$, $R^6$ and $R^7$, together with the nitrogen atom, form pyridine, quinoline, pyrimidine, thiazole or imidazole.

14. A mixture according to claim 1, wherein the molar ratio of the compounds of the formulae III:I is n:1 to 20:1.

15. A mixture according to claim 1, wherein the molar ratio of the compounds of the formulae III:II is 2:1 to 20:1.

16. A mixture according to claim 1, wherein the molar ratio of the compounds of the formulae III:VI is 1:1 to 20:1.

17. An aqueous system containing at least one organotin compound of the formulae I and/or II and/or VI according to claim 1 and at least one compound of the formula III according to claim 1, the molar ratio of the compounds of the formula III:I or III:VI being at least n:1 or 1:1, and the ratio of the compounds of the formula III:II being at least 2:1.

18. A system according to claim 17, containing about 0.1 to 1.5 mol-% of the compound of the formula I or of the formula VI, and/or about 0.1 to 3 mol-% of the compound of the formula III, and about 0.1 to 6 mol-% of the compound of the formula III.

19. Use of a mixture according to claim 1 as a biocide.

20. Use according to claim 19 for the protection of materials.

21. Use according to claim 20 for wood preservation.

22. Use according to claim 20 in anti-fouling paints.

23. Use according to claim 19 in disinfectants.

24. Use according to claim 19 for water treatment.